# EUROPEAN PATENT APPLICATION

(11) **EP 4 462 930 A1**
(43) Date of publication of application: **13.11.2024**
(21) Application number: 22918855.2
(22) Date of filing: 23.12.2022
(51) Int. Cl.: H04W 72/232, H04W 52/02, H04W 56/00

(54) **COMMUNICATION DEVICE, BASE STATION, AND COMMUNICATION METHOD**

(30) Priority: 07.01.2022 JP 2022001588
(71) Applicant: DENSO CORPORATION, Kariya-city, Aichi 448-8661 (JP); TOYOTA JIDOSHA KABUSHIKI KAISHA, Toyota-shi Aichi 471-8571 (JP)
(72) Inventor: NAGANO, Tatsuki, Kariya-city, Aichi 448-8661 (JP); TAKAHASHI, Hideaki, Kariya-city, Aichi 448-8661 (JP)
(74) Representative: TBK
(86) International application number: PCT/JP2022/047578
(87) International publication number: WO 2023/132271

(57) **Abstract**

A communication apparatus (100) comprises: a receiver (112) configured to receive a system information block (SIB) from a base station (200); and a controller (120) configured to determine a number of bits of a bitmap for an availability indication of a tracking reference signal (TRS) in downlink control information (DCI). The controller (120) is configured to determine, in a case where a TRS resource set configuration that is a list of TRS resource sets is included in the SIB, the number of bits on a basis of an identifier related to the TRS resource set, and determine, in a case where the TRS resource set configuration is not included in the SIB, the number of bits as 0.

## Description

### Cross-Reference to Related Applications

This application is based on and claims the benefit of priority of Japanese Patent Application No. 2022-001588, filed on January 7, 2022, the entire contents of which are incorporated herein by reference.

### Technical Field

The present disclosure relates to a communication apparatus, a base station, and a communication method.

### Background Art

In a mobile communication system conforming to the technical specification of the 3rd Generation Partnership Project (hereinafter, 3GPP (registered trademark)) which is a mobile communication system standardization project, a tracking reference signal (TRS) is provided as a reference signal (RS) individually configured in a communication apparatus for a communication apparatus in a radio resource control (RRC) connected state. The TRS is a reference signal for performing time and frequency synchronization (time and frequency tracking).

In 3GPP, standardization of a technology for reducing power consumption for a communication apparatus in an RRC idle state or an RRC inactive state has been discussed. In this technology, enabling a TRS resource (also referred to as a "TRS occasion") configured in a communication apparatus in an RRC connected state to be used even in a communication apparatus in an RRC idle state or an RRC inactive state (see, for example, Non Patent Literature 1) has been reviewed. Specifically, a base station broadcasts a TRS resource configuration through a system information block (also referred to as "broadcast information").

The communication apparatus in the RRC idle state or the RRC inactive state receives the TRS by using the TRS resource configuration configured by the system information block, so synchronization can be achieved without receiving an SSB (SS/PBCH Block), and a wake-up time period from establishment of synchronization to monitoring of paging can be shortened. Then, since the SSB is not received, an increase in power consumption related to reception of the SSB is suppressed.

A base station transmits downlink control information (DCI) including an availability indication indicating whether the TRS is transmitted on the basis of a TRS resource set configured by a TRS resource configuration to the communication apparatus. The communication apparatus determines whether the TRS is transmitted on the basis of the configured TRS resource set on the basis of the availability indication (see, for example, Non Patent Literature 1.). Further, an availability indication field where the availability indication is stored is a variable-length field indicated by up to six bits.

### Citation List

### Non Patent Literature

Non Patent Literature 1: 3GPP Contribution: R2-2111285

### Summary of Invention

A user equipment according to a first aspect comprises: a receiver configured to receive a system information block (SIB) from a base station (200); and a controller configured to determine a number of bits of a bitmap for an availability indication of a tracking reference signal (TRS) in downlink control information (DCI). The controller is configured to determine, in a case where a TRS resource set configuration that is a list of TRS resource sets is included in the SIB, the number of bits on a basis of an identifier related to the TRS resource set, and determine, in a case where the TRS resource set configuration is not included in the SIB, the number of bits as 0.

Abase station according to a second aspect comprises: a transmitter configured to transmit a system information block (SIB); and a controller configured to determine a number of bits of a bitmap for an availability indication of a tracking reference signal (TRS) in downlink control information (DCI). The controller is configured to determine, in a case where a TRS resource set configuration that is a list of TRS resource sets is not included in the SIB, the number of bits based on an identifier related to the TRS resource set, and determine, in a case where the TRS resource set configuration is not included in the SIB, the number of bits as 0.

A communication method according to a third aspect is a communication method performed by a communication apparatus. The communication method comprises the steps of: receiving a system information block (SIB) from a base station; and determining a number of bits of a bitmap for an availability indication of a tracking reference signal (TRS) in downlink control information (DCI). The step of determining includes determining, in a case where a TRS resource set configuration that is a list of TRS resource sets is included in the SIB, the number of bits on a basis of an identifier related to the TRS resource set, and determining, in a case where the TRS resource set configuration is not included in the SIB, the number of bits as 0.

### Brief Description of Drawings

Objects, features, advantages, and the like of the present disclosure will become more apparent from the following detailed description with reference to the accompanying drawings.
Fig. 1 is a diagram illustrating a configuration of a mobile communication system according to an embodiment.
Fig. 2 is a diagram illustrating a configuration example of a protocol stack in a mobile communication system according to an embodiment.
Fig. 3 is a diagram for describing an overview of eDRX.
Fig. 4 is a sequence diagram illustrating an operation example of a UE in an RRC idle state or an RRC inactive state.
Fig. 5 is a sequence diagram illustrating an operation example where a UE in an RRC idle state or an RRC inactive state receives a TRS.
Fig. 6 is a diagram illustrating a configuration of a UE according to an embodiment.
Fig. 7 is a diagram illustrating a configuration of a base station according to an embodiment.
Fig. 8 is a sequence diagram for describing a first operation example according to an embodiment.
Fig. 9 is an explanatory diagram (1/3) for describing the first operation example according to the embodiment.
Fig. 10 is an explanatory diagram (2/3) for describing the first operation example according to the embodiment.
Fig. 11 is an explanatory diagram (3/3) for describing the first operation example according to the embodiment.
Fig. 12 is an explanatory diagram (1/2) for describing a second operation example according to an embodiment.
Fig. 13 is an explanatory diagram (2/2) for describing the second operation example according to the embodiment.
Fig. 14 is an explanatory diagram for describing a third operation example according to an embodiment.
Fig. 15 is a sequence diagram for describing a fourth operation example according to an embodiment.
Fig. 16 is an explanatory diagram for describing the fourth operation example according to the embodiment.
Fig. 17 is an explanatory diagram for describing a fifth operation example according to an embodiment.
Fig. 18 is a flowchart for describing a sixth operation example according to an embodiment.

### Description of Embodiments

A mobile communication system according to an embodiment will be described with reference to the drawings. In the description of the drawings, the same or similar parts are denoted by the same or similar reference numerals.

In the current 3GPP specification, a method where the communication apparatus determines the number of bits of the availability indication field is not specified. As a result, the communication apparatus may incorrectly specify the availability indication field and be unable to correctly determine whether the TRS is transmitted on the basis of the configured TRS resource set. In light of the foregoing, it is one of objects of the present disclosure to provide a communication apparatus, a base station, and a communication method, which are capable of correctly determining whether the TRS is transmitted on the basis of the configured TRS resource set.

### (Configuration of Mobile Communication System)

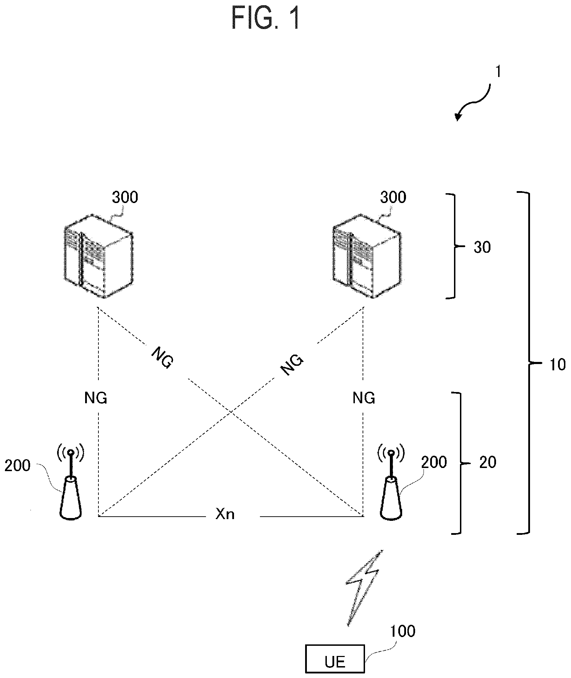

A configuration of a mobile communication system 1 according to an embodiment will be described with reference to Fig. 1. The mobile communication system 1 is, for example, a system conforming to a technical specification (TS) of the 3rd generation partnership project (3GPP). Hereinafter, as the mobile communication system 1, a description will be given, as an example, as to a 5th generation system (5GS) of the 3GPP standard, that is, a mobile communication system based on new radio (NR).

The mobile communication system 1 includes a network 10 and a user equipment (UE) 100 that communicates with the network 10. The network 10 includes a next generation radio access network (NG-RAN) 20, which is a 5G radio access network, and a 5G core network (5GC) 30, which is a 5G core network.

AUE 100 is an example of a communication apparatus. The UE 100 may be a mobile radio communication apparatus. The UE 100 may be an apparatus used by a user. The UE 100 may be a user equipment specified in the 3GPP technical specification. The UE 100 is, for example, a mobile apparatus such as a mobile phone terminal such as a smartphone, a tablet terminal, a laptop PC, a communication module, or a communication card. The UE 100 may be a vehicle (for example, a car or a train) or an apparatus provided in the vehicle. The UE 100 may be a transport body other than a vehicle (for example, a ship or an airplane) or an apparatus provided in the transport body. The UE 100 may be a sensor or an apparatus provided in the sensor. The UE 100 may be referred to as another name such as a mobile station, a mobile terminal, a mobile apparatus, a mobile unit, a subscriber station, a subscriber terminal, a subscriber apparatus, a subscriber unit, a wireless station, a wireless terminal, a wireless apparatus, a wireless unit, a remote station, a remote terminal, a remote apparatus, or a remote unit.

The NG-RAN 20 includes a plurality of base stations 200. Each of the base stations 200 manages at least one cell. A cell forms a minimum unit of a communication area. For example, one cell belongs to one frequency (a carrier frequency) and is formed by one component carrier. The term "cell" may represent a radio communication resource, and may also represent a communication target of the UE 100. Each base station 200 can perform radio communication with the UE 100 existing in its own cell. The base station 200 communicates with the UE 100 by using a protocol stack of the RAN. The base station 200 provides NR user plane and control plane protocol terminations towards the UE 100 and is connected to the 5GC 30 via an NG interface. Such an NR base station 200 may be referred to as a gNodeB (gNB).

The 5GC 30 includes a core network apparatus 300. The core network apparatus 300 includes, for example, an access and mobility management function (AMF) and/or a user plane function (UPF). The AMF performs mobility management of the UE 100. The UPF provides a function specialized for user plane processing. The AMF and the UPF are connected to the base station 200 via the NG interface.

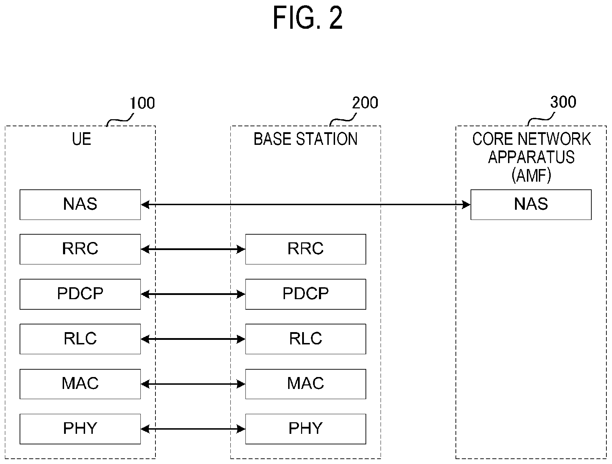

Next, a configuration example of a protocol stack in the mobile communication system 1 according to the embodiment will be described with reference to Fig. 2.

A protocol of a radio section between the UE 100 and the base station 200 includes a physical (PHY) layer, a medium access control (MAC) layer, a radio link control (RLC) layer, a packet data convergence protocol (PDCP) layer, and a radio resource control (RRC) layer.

The PHY layer performs encoding and decoding, modulation and demodulation, antenna mapping and demapping, and resource mapping and demapping. Data and control information are transmitted between the PHY layer of the UE 100 and the PHY layer of the base station 200 via a physical channel.

The physical channel includes a plurality of OFDM symbols in the time domain and a plurality of subcarriers in the frequency domain. One subframe includes a plurality of OFDM symbols in the time domain. A resource block is a resource allocation unit, and includes a plurality of OFDM symbols and a plurality of subcarriers. A frame can be composed of 10 ms, and can include 10 subframes composed of 1 ms. A number of slots corresponding to a subcarrier spacing may be included in the subframe.

Among the physical channels, a physical downlink control channel (PDCCH) plays a central role for purposes such as, for example, downlink scheduling allocation, uplink scheduling grant, and transmission power control.

In the NR, the UE 100 can use a bandwidth narrower than a system bandwidth (that is, the bandwidth of the cell). The base station 200 configures a bandwidth part (BWP) of consecutive PRBs in the UE 100. The UE 100 transmits and receives data and a control signal in an active BWP. In the UE 100, for example, a maximum of four BWPs can be configured. The BWPs may have different subcarrier spacings or may have frequencies overlapping each other. In a case where a plurality of BWPs are configured for the UE 100, the base station 200 can designate which BWP is to be activated by control in downlink. As a result, the base station 200 can dynamically adjust a UE bandwidth according to the amount of data traffic of the UE 100 and the like, and can reduce the UE power consumption.

The base station 200 can, for example, configure a maximum of three control resource sets (CORESET) for each of a maximum of four BWPs on a serving cell. The CORESET is a radio resource for control information to be received by the UE 100. A maximum of 12 CORESETs may be configured on the serving cell in the UE 100. Each CORESET has indices 0 to 11. For example, the CORESET includes six resource blocks (PRB) and one, two, or three consecutive OFDM symbols in the time domain.

The MAC layer performs data priority control, retransmission processing by hybrid ARQ (HARQ), a random access procedure, and the like. Data and control information are transmitted, via a transport channel, between the MAC layer of the UE 100 and the MAC layer of the base station 200. The MAC layer of the base station 200 includes a scheduler. The scheduler determines uplink and downlink transport formats (transport block size and modulation and coding scheme (MCS)) and resources to be allocated to the UE 100.

The RLC layer transmits data to the RLC layer on a reception side by using the functions of the MAC layer and the PHY layer. Data and control information are transmitted between the RLC layer of the UE 100 and the RLC layer of the base station 200 via a logical channel.

The PDCP layer performs header compression and decompression and encryption and decryption.

A service data adaptation protocol (SDAP) layer may be provided as an upper layer of the PDCP layer. The service data adaptation protocol (SDAP) layer performs mapping between an IP flow, which is a unit where a core network performs QoS control, and a radio bearer, which is a unit where an AS (access stratum) performs QoS control.

The RRC layer controls the logical channel, the transport channel, and the physical channel in response to establishment, reestablishment, and release of the radio bearer. RRC signaling for various configurations is transmitted between the RRC layer of the UE 100 and the RRC layer of the base station 200. In a case where there is an RRC connection between the RRC of the UE 100 and the RRC of the base station 200, the UE 100 is in an RRC connected state. In a case where there is no RRC connection between the RRC of the UE 100 and the RRC of the base station 200, the UE 100 is in an RRC idle state. In a case where an RRC connection between the RRC of the UE 100 and the RRC of the base station 200 is suspended, the UE 100 is in an RRC inactive state.

ANAS layer located above the RRC layer performs session management and mobility management of the UE 100. NAS signaling is transmitted between the NAS layer of the UE 100 and the NAS layer of the core network apparatus 300 (AMF). Note that the UE 100 has an application layer and the like in addition to a protocol of a radio interface.

### (Assumed Scenario)

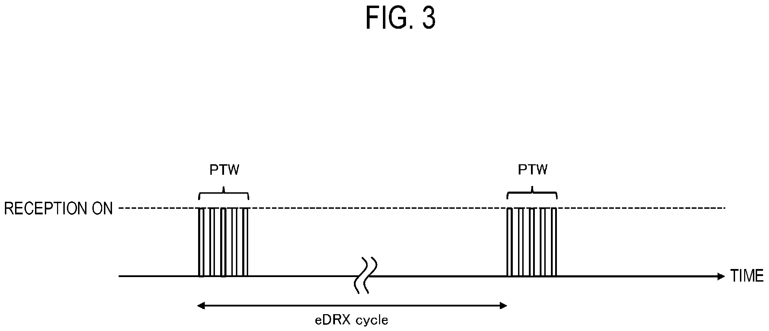

An assumed scenario in the mobile communication system 1 according to the embodiment will be described with reference to Figs. 3 to 6.

The UE 100 in the RRC idle state or the RRC inactive state monitors paging from the base station 200. Specifically, the UE 100 checks whether there is paging addressed to the UE 100 by receiving a physical downlink control channel (PDCCH) from the base station 200. For example, the UE 100 may receive the paging message by receiving (decoding) downlink control information (DCI) to which a cyclic redundancy check (CRC) parity bit scrambled by a paging radio network temporary identifier (P-RNTI) is added on the PDCCH. Here, the base station 200 may configure the P-RNTI for the UE 100. In addition, the DCI may be a DCI format used for scheduling of a physical downlink shared channel (PDSCH). That is, the paging message may be transmitted in the PDSCH. Here, the DCI to which the CRC (CRC parity bit) scrambled by the P-RNTI is added is also referred to as paging DCI.

Here, the UE 100 intermittently monitors paging using discontinuous reception (DRX) in order to reduce power consumption. Such a cycle of monitoring paging is referred to as a DRX cycle. In addition, a frame where the UE 100 should monitor paging is referred to as a paging frame (PF), and a subframe where the UE 100 should monitor paging in the PF is referred to as a paging occasion (PO).

Fig. 3 illustrates an operation example for an eDRX UE (that is, the eDRX user equipment) that performs extended discontinuous reception (eDRX).

The eDRX is a technology that uses a longer DRX cycle than a normal DRX in order to achieve further power saving of the UE 100. The UE 100 where DRX is configured wakes up every DRX cycle to monitor the PDCCH, and when this monitoring ends, the UE enters the sleep state until the next DRX cycle. Therefore, by using the longer DRX cycle (hereinafter, referred to as an "eDRX cycle") than normal DRX, the time period during which the receiver of the UE 100 can be turned off becomes longer, and further power saving is achieved.

In normal DRX, the DRX cycle is set to a time length of, for example, 32 radio frames, 64 radio frames, 128 radio frames, or 256 radio frames. On the other hand, the eDRX cycle used in the eDRX is set to a time length that is an integral multiple of a hyperframe including 1024 radio frames.

On the other hand, the UE 100 (that is, the eDRX UE) where eDRX is configured attempts to receive paging in a specific hyperframe (Paging Hyperframe: PH) every eDRX cycle. At this time, a time width for monitoring paging is referred to as a paging timing window (PTW), and paging occasion (PO) is monitored according to normal DRX during the PTW time period.

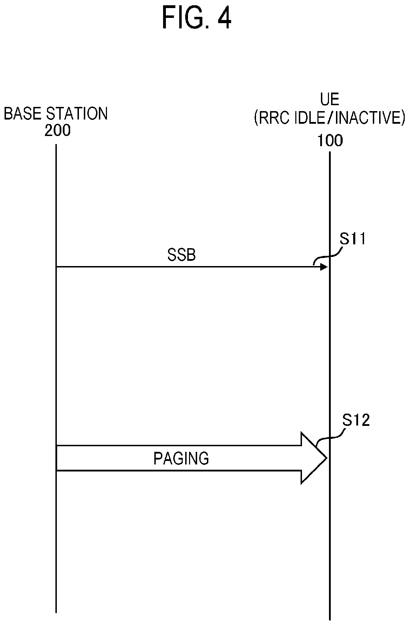

Fig. 4 illustrates an operation example of the UE in the RRC idle state or the RRC inactive state.

As illustrated in Fig. 4, in step S11, the base station 200 transmits the SSB to the UE 100. The SSB is another example of the downlink reference signal. The SSB includes a primary synchronization signal (PSS), a secondary synchronization signal (SSS), a PBCH (Physical Broadcast Channel), and a demodulation reference signal (DMRS). For example, the SSB may be composed of four consecutive OFDM symbols in the time domain. In addition, the SSB may be composed of 240 consecutive subcarriers (that is, 20 resource blocks) in the frequency domain. The PBCH is a physical channel that carries a master information block (MIB). The UE 100 performs time and frequency synchronization by receiving the SSB.

In step S12, the UE 100 monitors and receives paging in the PO. Note that the UE 100 maintains the waking up state from the reception of the SSB in step S11 to the PO. Therefore, as the time from the reception timing of the SSB to the timing of the PO is longer, the wake-up time period becomes longer, and the power consumption of the UE 100 increases.

In 3GPP, standardization of a technology for reducing power consumption for the UE 100 in the RRC idle state or the RRC inactive state is being discussed. In such a technology, it has been studied that a TRS resource (also referred to as a "TRS occasion") configured for the UE 100 in the RRC connected state can also be used in the UE 100 in the RRC idle state or the RRC inactive state. Specifically, the base station 200 broadcasts the TRS resource configuration, which is a configuration for the TRS resource, through a system information block (also referred to as "broadcast information").

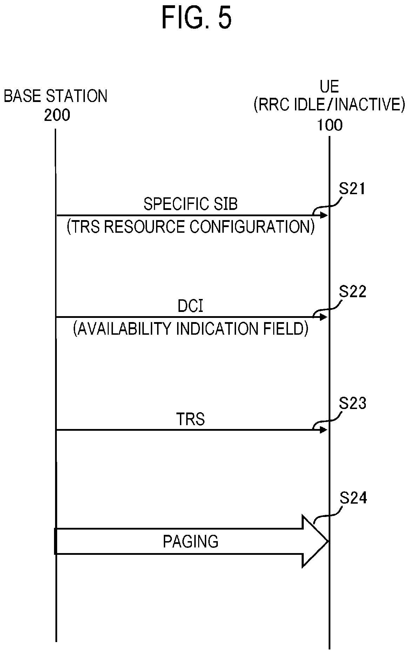

Fig. 5 illustrates an operation example where the UE 100 in the RRC idle state or the RRC inactive state receives the TRS. Note that the TRS may be a channel state information-reference signal (CSI-RS) used for tracking. That is, in the present embodiment, the TRS resource may include a CSI-RS resource.

In step S21, the base station 200 transmits a specific system information block (hereinafter, also referred to as a "specific SIB") including the TRS resource configuration. Specifically, the base station 200 transmits a system information block including one or a plurality of TRS resource configuration parameter groups on a broadcast channel. The specific system information block may be an existing system information block other than a system information block type 1 (SIB1), or may be a newly introduced type of system information block. The UE 100 receives the specific system information block.

The UE 100 configures the TRS resource set by the TRS resource configuration included in the specific system information block. Specifically, the UE 100 configures the TRS resource set on the basis of one or more TRS resource configuration parameter groups.

Here, the TRS resource configuration for configuring the TRS in the UE 100 in the RRC idle state or the RRC inactive state is CSI-ResourceConfig/NZP-CSI-RS-ResourceSet, and may include bwp-ID, resourceType, trs-Info, repetition, powerControlOffset, powerControlOffsetSS, requencyDomainAllocation, firstOFDMSymbolInTimeDomain, Density, startingRB, nrofRBs, and subcarrierSpacing as each parameter (see 3GPP TS 38.331). The TRS resource configuration may be only a part of a parameter group configured in the UE 100 in the RRC connected state.

In step S22, the base station 200 transmits the downlink control information (DCI) to the UE 100. The UE 100 receives the DCI from the base station 200.

The DCI includes an availability indication indicating whether the TRS is transmitted based on the configured TRS resource set. The availability indication is also referred to as a TRS availability indication.

The UE 100 determines whether the TRS is transmitted on the basis of the configured TRS resource set on the basis of the availability indication. In a case where it is determined that the TRS is transmitted, the UE 100 executes a process of step S23. In a case where it is determined that the TRS is not transmitted, the UE 100 may not execute the process of step S23. In this case, the UE 100 may execute a process of receiving the SSB.

As described above, the base station 200 notifies the UE 100 of whether the TRS is transmitted by the DCI, and thus it is possible to flexibly control the time and frequency synchronization on the basis of on the TRS.

In step S23, the base station 200 transmits the TRS. The UE 100 receives the TRS using the TRS resource configuration. The UE 100 can perform time and frequency synchronization by receiving the TRS without receiving the SSB.

In step S24, the UE 100 monitors and receives paging in the PO. Note that the UE 100 maintains the state of waking up from the reception of the TRS in step S21 to the PO. In a case where the time from the reception timing of the TRS to the timing of the PO is short, the wake-up time period is shortened, and the power consumption of the UE 100 is reduced. In addition, since the UE 100 does not receive the SSB, the power consumption accompanying the reception of the SSB can be reduced.

Further, an availability indication field where the availability indication is included in a variable-length field indicated by up to six bits. However, in the current 3GPP specification, a method where the UE 100 determines the number of bits of the availability indication field is not specified. As a result, the UE 100 may incorrectly specify the availability indication field and be unable to correctly determine whether the TRS is transmitted on the basis of the configured TRS resource set. In an embodiment to be described later, an operation for enabling correct determination of whether the TRS is transmitted on the basis of the configured TRS resource set will be described.

Further, in a case where the specific SIB includes the TRS resource set for the general UE performing DRX and the TRS resource set for the eDRX UE performing eDRX, it is unclear how the UE 100 determines the number of bits of the availability indication field. As a result, the UE 100 may incorrectly specify the availability indication field and be unable to correctly determine whether the TRS is transmitted on the basis of the configured TRS resource set. In an embodiment to be described later, an operation for enabling correct determination of whether the TRS is transmitted on the basis of the configured TRS resource set will be described.

### (Configuration of User Equipment)

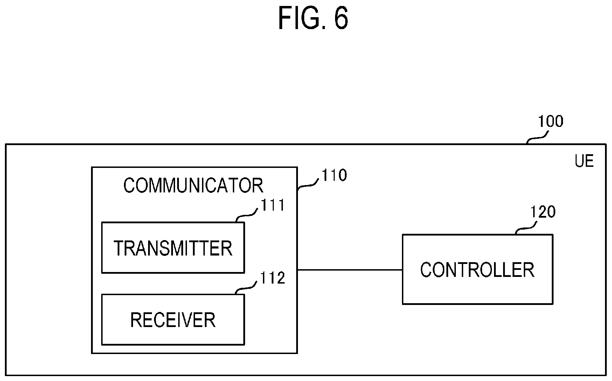

A configuration of the UE 100 according to the embodiment will be described with reference to Fig. 6. The UE 100 includes a communicator 110 and a controller 120.

The communicator 110 performs radio communication with the base station 200 by transmitting and receiving a radio signal to and from the base station 200. The communicator 110 includes at least one transmitter 111 and at least one receiver 112. The transmitter 111 and the receiver 112 may include a plurality of antennas and RF circuits. The antenna converts a signal into a radio wave and emits the radio wave into space. Further, the antenna receives a radio wave in space and converts the radio wave into a signal. The RF circuit performs analog processing of a signal transmitted and received via the antenna. The RF circuit may include a high frequency filter, an amplifier, a modulator, a low pass filter, and the like.

The controller 120 performs various types of control in the UE 100. The controller 120 controls communication with the base station 200 via the communicator 110. The operation of the UE 100 described above and described later may be an operation under the control of the controller 120. The controller 120 may include at least one processor capable of executing a program and a memory that stores the program. The processor may execute the program to perform the operation of the controller 120. The controller 120 may include a digital signal processor that executes digital processing of the signal transmitted and received via the antenna and the RF circuit. The digital processing includes processing of the protocol stack of the RAN. Further, the memory stores a program executed by the processor, parameters related to the program, and data related to the program. The memory may include at least one of a read only memory (ROM), an erasable programmable read only memory (EPROM), an electrically erasable programmable read only memory (EEPROM), a random access memory (RAM), and a flash memory. The whole or part of the memory may be included in the processor.

The UE 100 configured as described above performs time and frequency synchronization in the downlink using the TRS. In the UE 100, the receiver 112 receives, from the base station 200, the specific SIB including the TRS resource configuration, and the DCI including the availability indication indicating whether the TRS is transmitted on the basis of the TRS resource set configured by the TRS resource configuration. The controller 120 determines whether the TRS is transmitted on the basis of the configured TRS resource set on the basis of the availability indication. The controller 120 determines the number of bits of the availability indication field where the availability indication is stored on the basis of the number of TRS resource set groups specified by the TRS resource configuration. Accordingly, the UE 100 is able to specify the availability indication field and correctly determine whether the TRS is transmitted on the basis of the configured TRS resource set.

### (Configuration of Base Station)

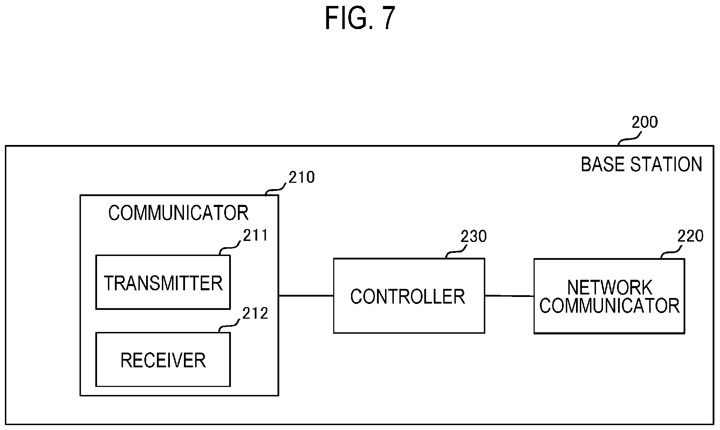

A configuration of the base station 200 according to the embodiment will be described with reference to Fig. 7. The base station 200 includes a radio communicator 210, a network communicator 220, and a controller 230.

For example, the communicator 210 receives a radio signal from the UE 100 and transmits a radio signal to the UE 100. The communicator 210 includes at least one transmitter 211 and at least one receiver 212. The transmitter 211 and the receiver 212 may include an RF circuit. The RF circuit performs analog processing of a signal transmitted and received via the antenna. The RF circuit may include a high frequency filter, an amplifier, a modulator, a low pass filter, and the like.

The network communicator 220 transmits and receives signals to and from the network. The network communicator 220 receives a signal from a neighboring base station connected via the Xn interface which is an interface between base stations, for example, and transmits the signal to the neighboring base station. Further, the network communicator 220 receives a signal from the core network apparatus 300 connected via the NG interface, for example, and transmits the signal to the core network apparatus 300.

The controller 230 performs various types of control in the base station 200. The controller 230 controls, for example, communication with the UE 100 via the communicator 210. Further, the controller 230 controls, for example, communication with a node (for example, the neighboring base station and the core network apparatus 300) via the network communicator 220. The operation of the base station 200 described above and described later may be an operation under the control of the controller 230. The controller 230 may include at least one processor capable of executing a program and a memory that stores the program. The processor may execute the program to perform the operation of the controller 230. The controller 230 may include a digital signal processor that executes digital processing of a signal transmitted and received via the antenna and the RF circuit. The digital processing includes processing of the protocol stack of the RAN. Further, the memory stores a program executed by the processor, parameters related to the program, and data related to the program. The whole or part of the memory may be included in the processor.

The base station 200 configured as described above performs radio communication with the UE 100 that performs time and frequency synchronization in the downlink using the TRS. In the base station 200, the transmitter 211 transmits, to the UE 100, the SIB including the TRS resource configuration, and the DCI including the availability indication indicating whether the TRS is transmitted on the basis of the TRS resource set configured by the TRS resource configuration. The controller 230 determines the number of bits of the availability indication field where the availability indication is stored on the basis of the number of TRS resource set groups specified by the TRS resource configuration. Accordingly, the UE 100 is able to specify the availability indication field and correctly determine whether the TRS is transmitted on the basis of the configured TRS resource set.

### (First Operation Example)

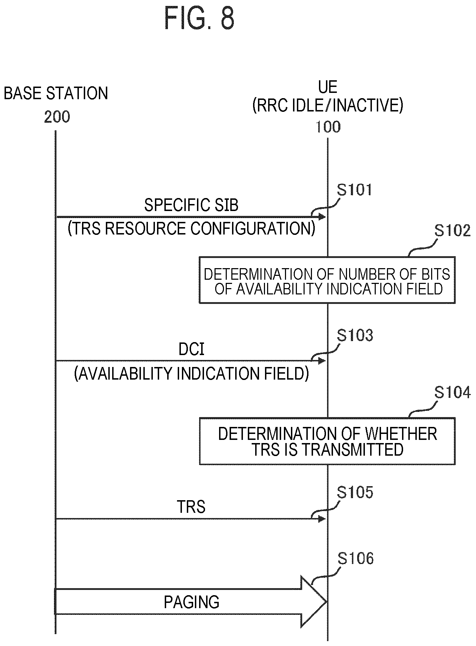

A first operation example will be described with reference to Figs. 8 to 11. The present operation is based on the configuration and operation described above. Therefore, the already given description may be omitted.

In step S101, the transmitter 211 of the base station 200 transmits the specific SIB including the TRS resource configuration. The receiver 112 of the UE 100 receives the specific SIB. Hereinafter, the specific SIB may include a configuration of a TRS for tracking (for example, CSI-RS) that can be used by the UE 100 in the RRC idle state or the RRC inactive state. The specific SIB is also referred to as SIBXX.

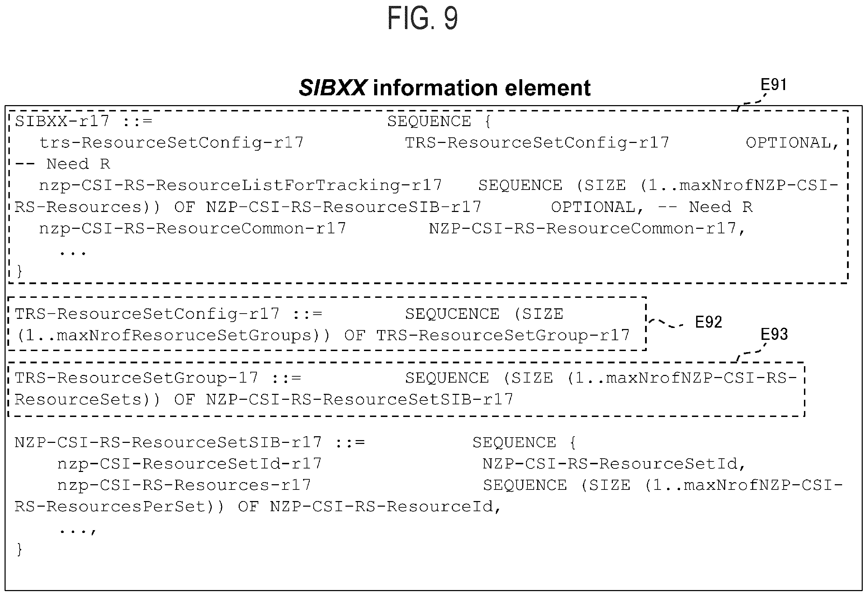

The specific SIB includes the TRS resource configuration. As illustrated in Fig. 9, the specific SIB may include, as the TRS resource configuration, the TRS resource set configuration (trs-ResourceSetConfig-r17/TRS-ResourceSetConfig-r17), a dedicated TRS configuration list (nzp-CSI-RS-ResourceListForTracking-r17), and a common TRS configuration (nzp-CSI-RS-ResourceCommon-r17/NZP-CSI-RS-ResourceCommon-r17) (see E91 in Fig. 9). Note that "-r17" means information elements introduced in Release 17 of the 3GPP technical specification, but these information elements may be introduced in Release 18 or later.

The TRS resource set configuration (TRS -Resource S etconfig-r 17) may be configured by one or more TRS resource set groups (TRS-ResourceSetGroup-r17) (see E92 in Fig. 9). Specifically, the TRS resource set configuration may be configured in a list form including the TRS resource set group. As described above, the TRS resource set configuration may specify the TRS resource set group.

The TRS resource set group may be a list of TRS resource sets (NZP-CSI-RS-ResourceSetSIB-r17) (see E93 in Fig. 9). Therefore, the TRS resource set group is constituted by the grouped TRS resource sets. That is, the TRS resource set configuration may be a parameter for grouping the TRS resource sets.

The TRS resource set may be a set of a TRS resource set identifier (nzp-CSI-ResourceSetId-r17/NZP-CSI-RS-ResourceSetId) and a TRS resource (nzp-CSI-RS-Resources-r17). Note that the TRS resource may be a list of identifiers (NZP-CSI-RS-ResourceId) of TRS resources related to the TRS resource.

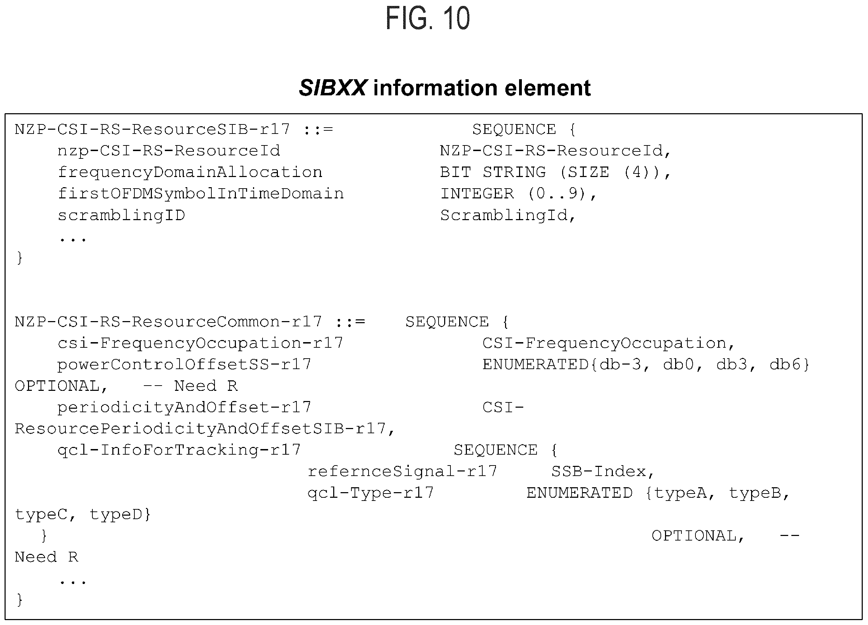

The dedicated TRS configuration list is a list of dedicated TRS configurations (NZP-CSI-RS-ResourceSIB-r17). As illustrated in Fig. 10, the dedicated TRS configuration may include an identifier (nzp-CSI-RS-ResourceId/NZP-CSI-RS-ResourceId) of the TRS resource, a parameter (frequencyDomainAllocation) indicating allocation of the TRS in the frequency direction, a parameter (firstOFDMSymbolInTimeDomain) indicating allocation of the TRS in the time direction, and a parameter (scramblingID/ScramblingId) indicating a scramble identifier of the TRS.

The common TRS configuration may be a set of parameters that are commonly applied to all dedicated TRS configurations. As illustrated in Fig. 10, the common TRS configuration includes a parameter (csi-FrequencyOccupation-r17/CSI-FrequencyOccupation) indicating an occupation range of the TRS in the frequency direction, a parameter (powerControlOffsetSS-r17) indicating a power offset of the TRS for the synchronization signal, a parameter (periodicityAndOffset-r17/CSI-ResourcePeriodicityAndOffsetSIB-r17) indicating a periodicity and a time offset of the TRS, and a parameter (qcl-InfoForTracking-r17) related to the QCL of the TRS.

In step S102, the controller 120 of the UE 100 determines the number of bits of the availability indication field. Specifically, the controller 120 of the UE 100 determines the number of bits of the availability indication field on the basis of the number of TRS resource set groups. In a case where the TRS resource set configuration is configured in the list format including the TRS resource set group, the controller 120 of the UE 100 determines the number of bits of the availability indication field on the basis of the number of entries of one or more TRS resource set groups in the list format. In a case where the number of entries (which may be an entry size) of the TRS resource set group is N, the controller 120 of the UE 100 determines that the number of bits of the availability indication field is N.

In step S103, the transmitter 211 of the base station 200 transmits the DCI to the UE 100. The receiver 112 of the UE 100 receives the DCI from the base station 200.

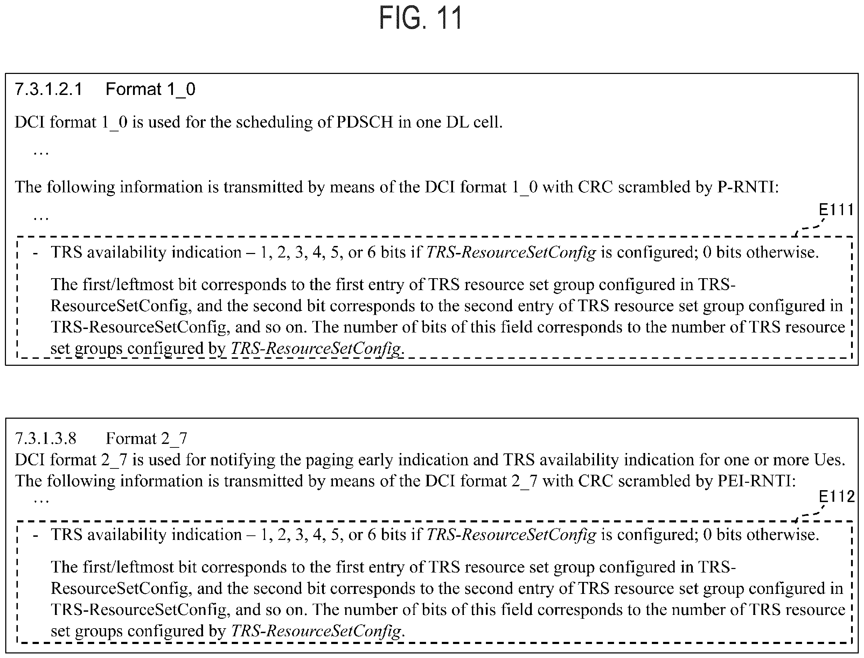

The DCI may be a DCI format 1_0 used for PDSCH scheduling in one downlink cell. As illustrated in Fig. 11, the DCI format 1_0 may include the availability indication (TRS availability indication) (see E111 in Fig. 11). The availability indication may be stored in the availability indication field in the DCI format 1_0. The availability indication may be transmitted by the DCI format 1_0, which is CRC-scrambled with a paging-radio network temporary identifier (P-RNTI).

In a case where the TRS resource set configuration (TRS-ResourceSetConfig) is configured, the availability indication is a bitmap of the number of bits of any one of 1 to 6. Therefore, the availability indication field is indicated by the number of bits of any one of 1 to 6. On the other hand, the availability indication (that is, the availability indication field) is 0 bit in a case where the TRS resource set configuration is not configured.

A bit position of the bitmap constituting the availability indication is related to the entry of the TRS resource set group configured by the TRS resource set configuration. Specifically, the first bit or the leftmost bit is related to the first entry of the TRS resource set group constituted by the TRS resource set configuration, and the second bit is related to the second entry of the TRS resource set group constituted by the TRS resource set configuration. The number of bits of the availability indication field is related to the number of TRS resource set groups constituted by TRS resource set configuration.

Further, the DCI may be a DCI format 2_7 used for notifying one or more UEs 100 of a paging early indication and the availability indication. As illustrated in Fig. 11, the DCI format 2_7 may include the availability indication (see E112 in Fig. 11). The availability indication may be stored in the availability indication field in the DCI format 2_7. The availability indication may be transmitted by the DCI format 2_7 CRC-scrambled with the paging early indication-radio network temporary identifier (PEI-RNTI).

In step S104, the controller 120 of the UE 100 determines whether the TRS is transmitted.

The controller 120 of the UE 100 specifies the availability indication (or the availability indication field) on the basis of the number of bits of the availability indication determined. The controller 120 determines whether the TRS is transmitted on the basis of the specified availability indication.

Specifically, in a case where a value at the bit position of the bitmap constituting the availability indication is a designated value (for example, "1"), the controller 120 of the UE 100 determines that the TRS of the TRS resource set group of the associated entry has been transmitted. On the other hand, in a case where the value at the bit position is a value (for example, "0") different from the designated value, the controller 120 determines that the TRS of the TRS resource set group of the associated entry has not been transmitted.

The controller 120 determines whether the TRS is being transmitted on the basis of the configured TRS resource set on the basis of the value of the bit position related to the entry of the TRS resource set group to which the TRS resource set configured in the UE 100 belongs. In a case where it is determined that the TRS is transmitted on the basis of the configured TRS resource set, the controller 120 executes a process of step S105. In a case where it is determined that the TRS is not transmitted, the UE 100 may not execute the process of step S105. In this case, the UE 100 may execute a process of receiving the SSB.

Steps S105 and S106 are related to steps S23 and S24, respectively.

As described above, the transmitter 211 of the base station 200 transmits, to the UE 100, the SIB including the TRS resource configuration, and the DCI including the availability indication indicating whether the TRS is transmitted on the basis of the TRS resource set configured by the TRS resource configuration. The controller 230 of the base station 200 determines the number of bits of the availability indication field where the availability indication is stored on the basis of the number of TRS resource set groups specified by the TRS resource configuration. The receiver 112 of the UE 100 receives, from the base station 200, the SIB including the TRS resource configuration, and the DCI including the availability indication indicating whether the TRS is transmitted on the basis of the TRS resource set configured by the TRS resource configuration. The controller 120 determines whether the TRS is transmitted on the basis of the configured TRS resource set on the basis of the availability indication. The controller 120 determines the number of bits of the availability indication field where the availability indication is stored on the basis of the number of TRS resource set groups specified by the TRS resource configuration. Accordingly, the UE 100 is able to specify the availability indication field and correctly determine whether the TRS is transmitted on the basis of the configured TRS resource set.

Further, the TRS resource configuration may include the TRS resource set configuration constituted by one or a plurality of TRS resource set groups. The controller 120 may determine the number of bits of the availability indication field on the basis of the number of TRS resource set groups constituting the TRS resource set configuration. The controller 120 can determine the number of bits of the availability indication field by the TRS resource set configuration, and can correctly determine whether the TRS is transmitted on the basis of the configured TRS resource set.

Further, the TRS resource set configuration may be configured in a list form including one or a plurality of TRS resource set groups. The controller 120 may determine the number of bits of the availability indication field on the basis of the number of entries of one or more TRS resource set groups in the list format. Accordingly, even though the TRS resource set configuration does not include the identifier identifying the group, the controller 120 can determine the number of bits of the availability indication field, and can reduce the information amount of the TRS resource configuration.

In addition, the bit position of the bitmap constituting the availability indication may be related to the entry. In a case where the value at the bit position is the designated value, the controller 120 may determine that the TRS of the TRS resource set group of the associated entry is being transmitted. Accordingly, the controller 120 can determine whether the TRS is being transmitted on the basis of the TRS resource set included in the TRS resource set group of the associated entry. As a result, it is possible to prevent the UE 100 from attempting to receive the TRS even though the TRS is not transmitted.

### (Second Operation Example)

A second operation example will be described with reference to Figs. 8, 12, and 13. The description similar to the operation example described above will be appropriately omitted. In the second operation example, the UE 100 determines the number of bits of the availability indication field on the basis of a group identifier.

In step S101, the transmitter 211 of the base station 200 transmits the following specific SIB. The receiver 112 of the UE 100 receives the specific SIB.

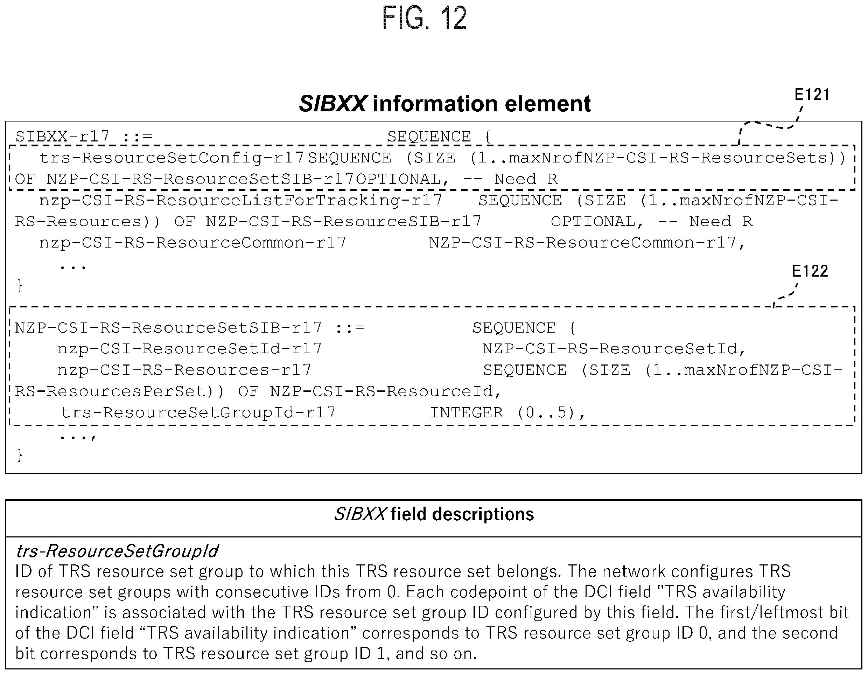

As illustrated in Fig. 12, the TRS resource set configuration (trs-ResourceSetConfig-r17) included in the specific SIB may be a list of TRS resource sets (NZP-CSI-RS-ResourceSetSIB-r17) (see E121 in Fig. 12). The TRS resource set may include a TRS resource set identifier (nzp-CSI-ResourceSetId-r17/NZP-CSI-RS-ResourceSetId), a TRS resource (nzp-CSI-RS-Resources-r17), and a group identifier (trs-ResourceSetGroupId-r17) identifying the TRS resource set group (see E122 in Fig. 12). Therefore, one or more TRS resource sets are related to the group identifier. The group identifier is an identifier (ID) of the TRS resource set group to which the associated TRS resource set belongs. Therefore, each TRS resource set group is configured by the TRS resource sets where the associated group identifier values are the same. Note that the base station 200 (the network 10) constitutes the TRS resource set group by consecutive IDs from 0.

In step S102, the controller 120 of the UE 100 determines the number of bits of the availability indication field on the basis of the number of group identifiers. In a case where the number of group identifiers is N, the controller 120 determines that the number of bits of the availability indication field is N.

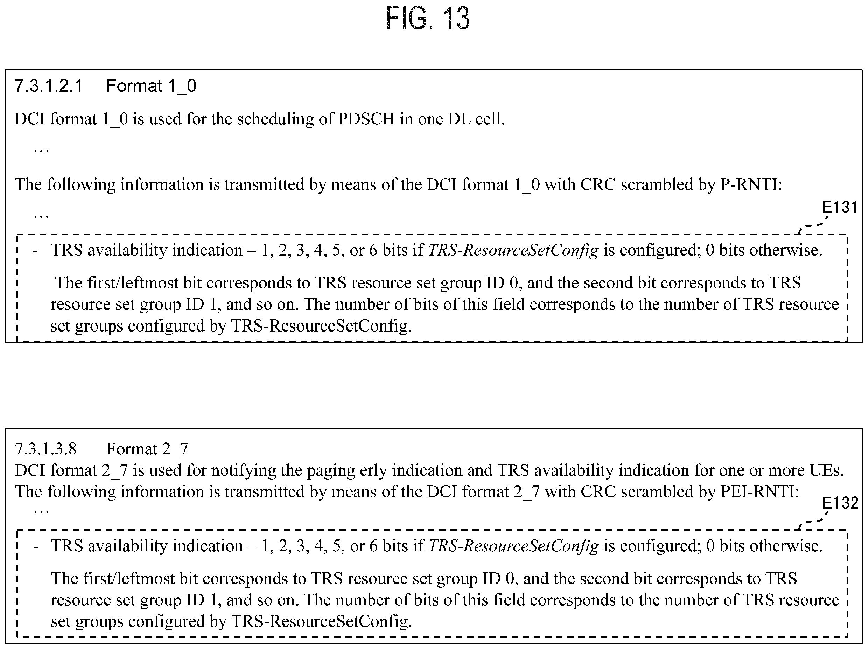

In the DCI transmitted in step S103, each code point of the "availability indication" in the DCI field, that is, the bit position of the bitmap of the availability indication is related to the TRS resource set group ID. Specifically, the first or leftmost bit of the bitmap constituting the availability indication is related to a TRS resource set group ID0, and the second bit is related to a TRS resource set group ID1 (see E131 and E132 in Fig. 13).

In step S104, the controller 120 of the UE 100 determines whether the TRS is being transmitted on the basis of the configured TRS resource set on the basis of the value of the bit position related to the group identifier identifying the TRS resource set group to which the TRS resource set configured in the UE 100 belongs.

As described above, the TRS resource configuration may include the TRS resource set configuration constituted by one or a plurality of TRS resource sets related to the group identifier. The controller 120 determines the number of bits of the availability indication field on the basis of the number of group identifiers. Accordingly, the UE 100 is able to specify the availability indication field and correctly determine whether the TRS is transmitted on the basis of the configured TRS resource set.

### (Third Operation Example)

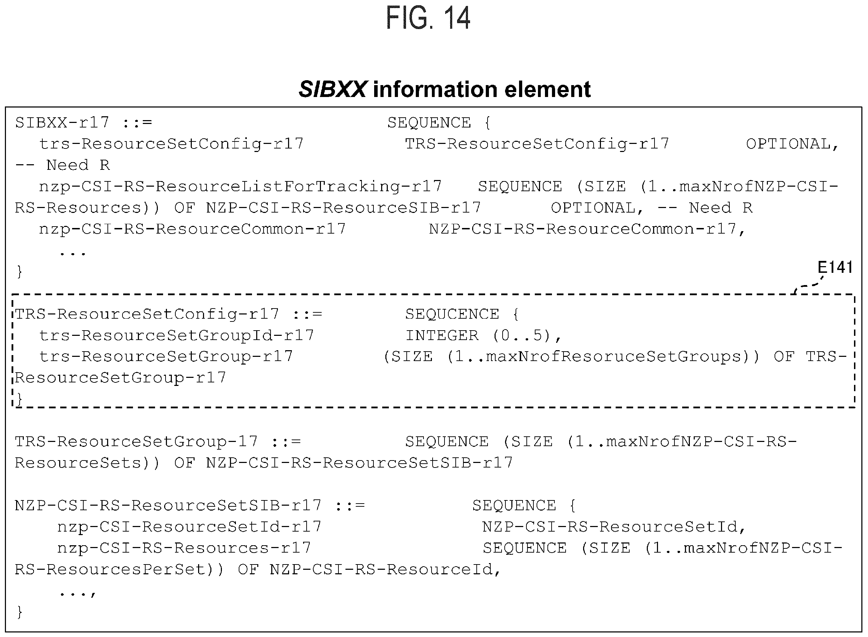

A third operation example will be described with reference to Figs. 8 and 14. The description similar to the operation example described above will be appropriately omitted. In the third operation example, one or a plurality of TRS resource set groups are related to the group identifier in a format different from that of the second operation example.

As illustrated in Fig. 14, the specific SIB includes the TRS resource configuration, similarly to the first operation example. In the TRS resource set configuration (trs-ResourceSetConfig-r17/TRS-ResourceSetConfig-r17) included in the TRS resource configuration, one or a plurality of TRS resource set groups (TRS-ResourceSetGroup-r17) are related to the group identifier (trs-ResourceSetGroupId-r17) (E141 in Fig. 14). Therefore, the TRS resource configuration includes the TRS resource set configuration where one or a plurality of TRS resource set groups are related to the group identifier.

In step S102, the controller 120 of the UE 100 determines the number of bits of the availability indication field on the basis of the number of group identifiers, similarly to the second operation example. Accordingly, the UE 100 is able to specify the availability indication field and correctly determine whether the TRS is transmitted on the basis of the configured TRS resource set.

### (Fourth Operation Example)

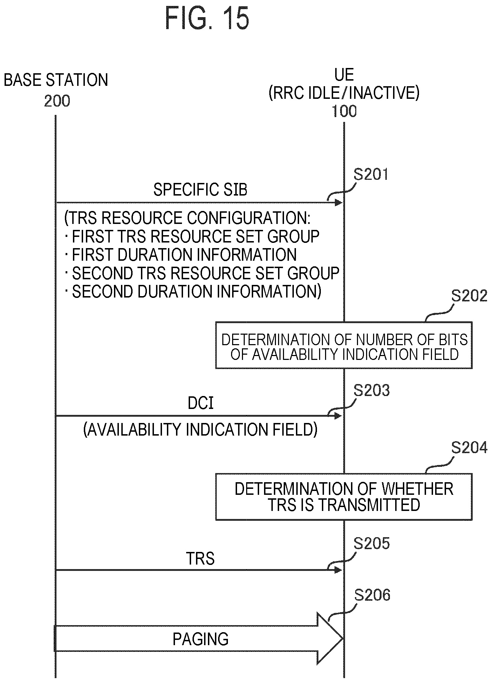

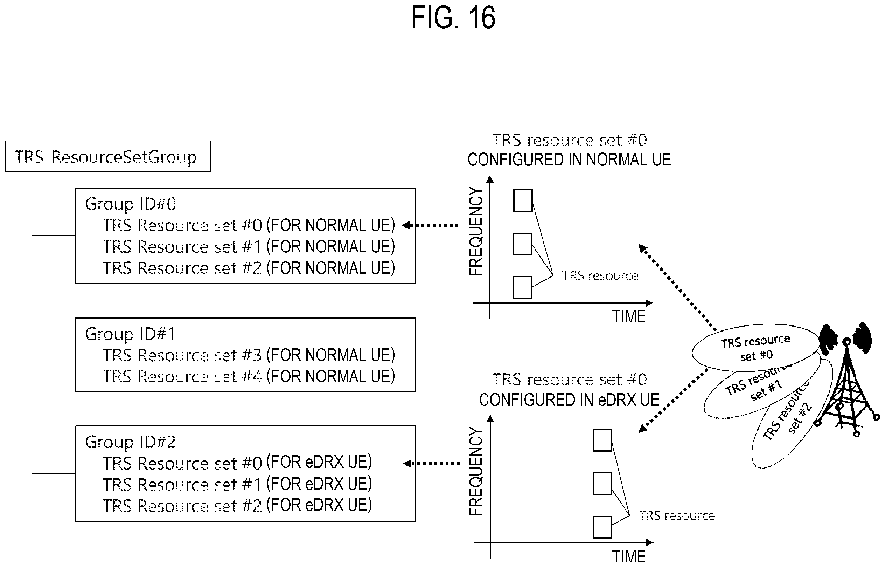

A fourth operation example will be described with reference to Figs. 15 and 16. The description similar to the operation example described above will be appropriately omitted. In the fourth operation example, the TRS resource configuration includes separate TRS resource set groups in the general UE performing DRX and the eDRX UE.

As illustrated in Fig. 15, in step S201, the transmitter 211 of the base station 200 transmits the following specific SIB. The receiver 112 of the UE 100 receives the specific SIB.

The specific SIB includes a first TRS resource set group for the general UE performing DRX and a second TRS resource set group for the eDRX UE performing eDRX. In the present operation example, different group identifiers are allocated in the first TRS resource set group and the second TRS resource set group.

Specifically, in Fig. 16, the first TRS resource set group includes a TRS resource set group constituted by a TRS resource set related to a group identifier #0 and a TRS resource set group constituted by a TRS resource set related to a group identifier #1. The second TRS resource set includes a TRS resource set group constituted by a TRS resource set related to the group identifier #2.

Each TRS resource set related to each of the group identifier #0 and the group identifier #1 is the TRS resource set for the normal UE. Each TRS resource set related to the group identifier #2 is the TRS resource set for the eDRX UE.

Note that the specific SIB may include a group identifier, and information indicating whether the TRS resource set related to the group identifier is for the eDRX UE (or for the normal UE). Alternatively, each TRS resource set may be related to information indicating whether the TRS resource set is for the eDRX UE (or for the normal UE). Alternatively, the information indicating whether the TRS resource set related to the group identifier is for the eDRX UE (or for the normal UE) may be related to the group identifier. The controller 120 of the UE 100 can determine whether each TRS resource set is for the normal UE or the eDRX UE on the basis of the information.

The specific SIB may include, for each of the first TRS resource set and the second TRS resource set, time period information indicating a validity time period of the availability indication indicated by the availability indication field. The time period information may include first time period information that is a validity time period of the availability indication for the first TRS resource set and second time period information that is a validity time period of the availability indication for the second TRS resource set. The controller 120 can determine the validity time period of the availability indication for the first TRS resource set on the basis of the first time period information. Similarly, the controller 120 can determine the validity time period of the availability indication for the second TRS resource set on the basis of the second time period information.

The validity time period for the first TRS resource set may be an integer multiple of a first time unit. The first time unit may be, for example, one default paging cycle.

The validity time period for the second TRS resource set may be an integer multiple of a second time unit that is longer than the first time unit. The first time unit may be, for example, an eDRX cycle, or may be an acquisition cycle (Specifically, an eDRX acquisition period) that triggers the UE 100 where the eDRX is configured to acquire an updated SIB.

In step S202, the controller 120 of the UE 100 determines the number of bits of the availability indication field. The controller 120 determines the number of bits of the availability indication field on the basis of the total number of the first TRS resource set group and the second TRS resource set group.

For example, the controller 120 may determine the number of bits of the availability indication field on the basis of the total number of the group identifiers of the first TRS resource set group and the second TRS resource set group. In the example of Fig. 16, the controller 120 may determine 3, which is a total number (that is, a sum value) of 2, which is the number of group identifiers of the first TRS resource set group, and 1, which is the number of group identifiers of the second TRS resource set group, as the number of bits of the availability indication field.

Steps S203 to S206 are similar to steps S103 to S 106.

Note that, for example, in a case where the first TRS resource set related to the group identifier #0 is configured, the controller 120 determines whether the TRS is being transmitted on the basis of the value at the first bit position of the bitmap constituting the availability indication. Similarly, for example, in a case where the second TRS resource set related to the group identifier #2 is configured, the controller 120 determines whether TRS is being transmitted on the basis of the value at the third bit position of the bitmap constituting the availability indication.

Further, in a case where the UE 100 is the normal UE, the controller 120 receives the TRS on the basis of the first TRS resource set. In a case where the UE 100 is the eDRX UE, the controller 120 receives the TRS on the basis of the second TRS resource set. For example, in a case where the DRX configuration is configured (for example, the DRX cycle is applied.), the controller 120 determines that the UE 100 is the normal UE. On the other hand, for example, in a case where the eDRX configuration is configured (for example, the eDRX cycle is applied), the controller 120 determines that the UE 100 is the eDRX UE.

As described above, the controller 120 may determine the number of bits of the availability indication field on the basis of the total number of the first TRS resource set group and the second TRS resource set group. Further, the controller 120 may determine the number of bits of the availability indication field on the basis of the total number of the group identifiers of the first TRS resource set group and the second TRS resource set group. Accordingly, even in a case where the specific SIB includes the TRS resource set for the general UE performing DRX and the TRS resource set for the eDRX UE performing eDRX, the UE 100 can specify the availability indication field and correctly determine whether the TRS is transmitted on the basis of the configured TRS resource set.

Further, since different group identifiers are allocated in the first TRS resource set group and the second TRS resource set group, the base station 200 (the network 10) can determine whether each of the TRS transmitted on the basis of the first TRS resource set and the TRS transmitted on the basis of the second TRS resource set is transmitted. Accordingly, the base station 200 can flexibly control the transmission of the TRS.

In addition, the receiver 112 receives, from the base station 200, the specific SIB including the time period information indicating the validity time period of the availability indication for each of the first TRS resource set and the second TRS resource set. Accordingly, even in a case where the first TRS resource set and the second TRS resource set are included in the specific SIB, the controller 120 can detect the validity time period of the availability indication for each of the first TRS resource set and the second TRS resource set. As a result, the UE 100 can correctly determine whether the TRS is transmitted on the basis of the configured TRS resource set.

### (Fifth Operation Example)

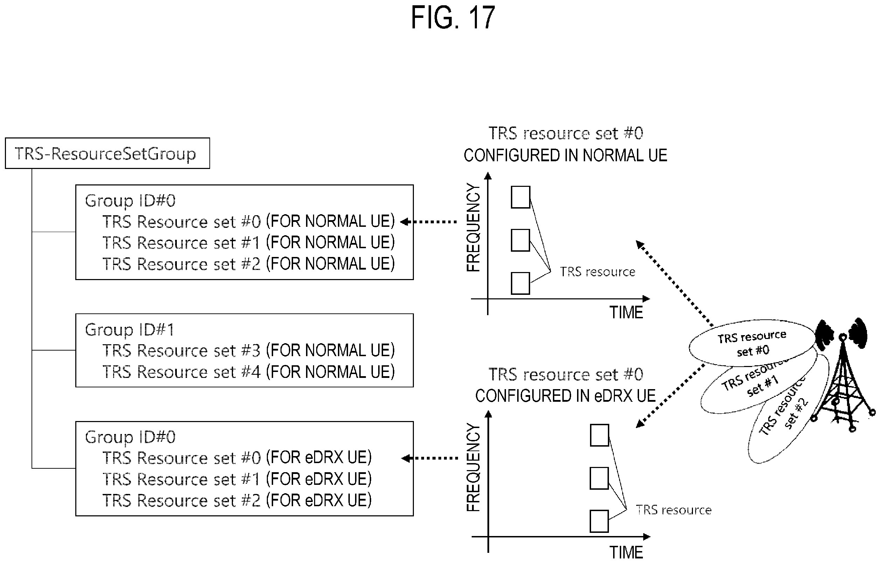

A fifth operation example will be described with reference to Fig. 17. The description similar to the operation example described above will be appropriately omitted. In the fifth operation example, the UE 100 determines the number of bits of the availability indication field on the basis of a total number of a group having a larger number out of the first TRS resource set group and the second TRS resource set group.

As illustrated in Fig. 17, in the present operation example, the group identifiers are individually allocated in the first TRS resource set group and the second TRS resource set group.

Specifically, in Fig. 17, the first TRS resource set group includes a TRS resource set group constituted by a TRS resource set related to a group identifier #0 and a TRS resource set group constituted by a TRS resource set related to a group identifier #1. The second TRS resource set includes a TRS resource set group constituted by a TRS resource set related to the group identifier #0.

Each TRS resource set related to each of the group identifier #0 and the group identifier #1 is the TRS resource set for the normal UE. Each TRS resource set related to the group identifier #0 is the TRS resource set for the eDRX UE.

The controller 120 of the UE 100 may determine the number of bits of the availability indication field on the basis of a total number of a group with a larger number out of the first TRS resource set group and the second TRS resource set group. The controller 120 may determine the number of bits of the availability indication field on the basis of the total number of group identifiers of the group with the larger number.

In the example of Fig. 16, the controller 120 compares 2, which is the number of group identifiers of the first TRS resource set group, with 1, which is the number of group identifiers of the second TRS resource set group, and determines that the number of group identifiers of the first TRS resource set group is larger. The controller 120 may determine 2, which is the number of group identifiers of the first TRS resource set group with the larger number, as the number of bits of the availability indication field.

As described above, the controller 120 may determine the number of bits of the availability indication field on the basis of a total number of a group with a larger number out of the first TRS resource set group and the second TRS resource set group. Further, the controller 120 may determine the number of bits of the availability indication field on the basis of the total number of group identifiers with the larger number. Accordingly, even in a case where the specific SIB includes the TRS resource set for the general UE performing DRX and the TRS resource set for the eDRX UE performing eDRX, the UE 100 can specify the availability indication field and correctly determine whether the TRS is transmitted on the basis of the configured TRS resource set.

Further, since the group identifiers are individually allocated in the first TRS resource set group and the second TRS resource set group, the base station 200 (the network 10) can increase the number of TRS resource set groups to which the group identifiers are allocated, as compared with the fourth operation example. Accordingly, the base station 200 can finely configure the TRS resource configuration.

Note that, in the present operation example, in a case where the same group identifier (For example, the group identifier #0 in Fig. 16) is allocated to the first TRS resource set group and the second TRS resource set group, the controller 230 of the base station 200 determines whether both TRSs are transmitted for the TRSs transmitted on the basis of the first TRS resource set and the second TRS resource set to which the same group identifier is allocated. That is, the controller 230 of the base station 200 does not perform control such that the TRS based on one TRS resource set is transmitted, and the TRS based on the other TRS resource set is not transmitted.

### (Sixth Operation Example)

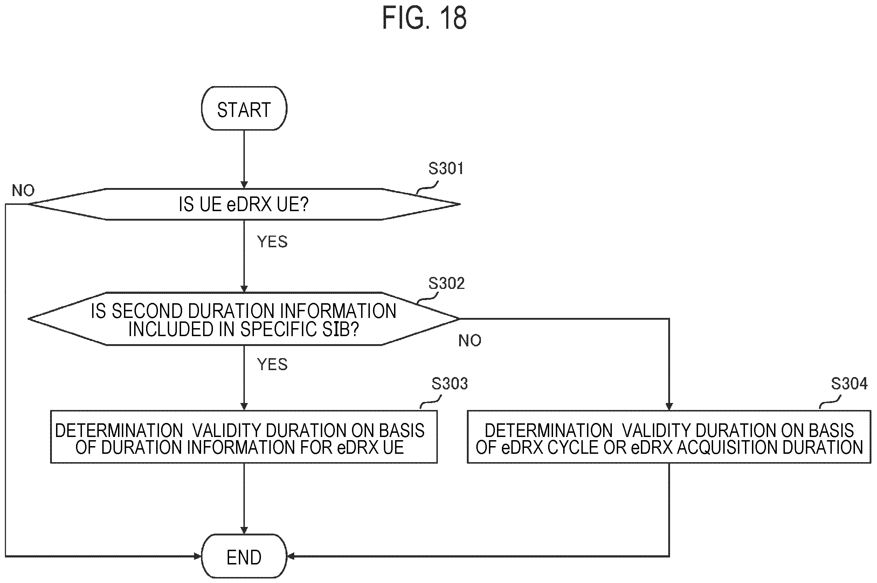

A sixth operation example will be described with reference to Fig. 18. The description similar to the operation example described above will be appropriately omitted. In the sixth operation example, the operation where the UE 100 determines the validity time period of the availability indication for the second TRS resource set group will be described.

The controller 120 of the UE 100 may execute the following process on the basis of the reception of the specific SIB, for example.

As illustrated in Fig. 18, in step S301, the controller 120 of the UE 100 determines whether the UE 100 is the eDRX UE. In a case where the UE 100 is the eDRX UE, the controller 120 executes a process of step S302. On the other hand, in a case where the UE 100 is not the eDRX UE, the controller 120 may end the process.

Further, for example, in a case where the eDRX configuration is configured (for example, the eDRX cycle is applied), the controller 120 may determine that the UE 100 is the eDRX UE. In a case where the DRX configuration is configured (for example, the DRX cycle is applied.), the controller 120 may determine that the UE 100 is not the eDRX UE.

In step S302, the controller 120 determines whether the second time period information indicating the validity time period of the availability indication for the second TRS resource set is included in the specific SIB. In a case where the second time period information is included in the specific SIB, the controller 120 executes a process of step S303. In a case where the second time period information is not included in the specific SIB, the controller 120 executes a process of step S304.

In step S303, the controller 120 determines the validity time period on the basis of the second time period information.

In step S304, the controller 120 may determine the validity time period on the basis of the eDRX cycle or the eDRX acquisition cycle which is an acquisition cycle that triggers the eDRX UE to acquire the updated SIB.

For example, the controller 120 may recognize a time period until the next eDRX cycle as the validity time period as the default configuration. Alternatively, for example, as the default configuration, the controller 120 may recognize a time period until the boundary of the acquisition cycle as the validity time period.

As described above, in a case where the UE 100 is the eDRX UE, the controller 120 may determine the validity time period on the basis of the second time period information when the second time period information that is the time period information for the eDRX UE is included in the specific SIB. When the second time period information is not included in the specific SIB, the controller 120 may determine the validity time period on the basis of the eDRX cycle or the eDRX acquisition cycle. Accordingly, the UE 100 can appropriately determine the validity time period regardless of the presence or absence of the second time period information in the specific SIB. As a result, the controller 120 can correctly determine whether the TRS is transmitted on the basis of the configured TRS resource set.

### (Other Embodiments)

The operation sequence (and the operation flow) in the above-described embodiment may not necessarily be performed in chronological order according to the order described in the flow diagram or the sequence diagram. For example, the steps in the operation may be performed in an order different from the order described in the flowchart or the sequence diagram, or may be performed in parallel. In addition, some of the steps in the operation may be removed or additional steps may be added to the process. Furthermore, the operation sequence (and the operation flow) in the above-described embodiment may be performed separately and independently, or may be performed by combining two or more operation sequences (and operation flows). For example, some steps of one operation flow may be added to other operation flows, or some steps of one operation flow may be replaced with some steps of other operation flows.

In the above-described embodiments, the mobile communication system based on the NR is described as the example of the mobile communication system 1. However, the mobile communication system 1 is not limited to this example. The mobile communication system 1 may be a system conforming to a TS of long term evolution (LTE) or another generation system (for example, a sixth generation) of the 3GPP standard. The base station 200 may be an eNB configured to provide protocol terminations of E-UTRA user plane and control plane toward the UE 100 in LTE. The mobile communication system 1 may be a system conforming to a TS defined in a standard other than the 3GPP standard. The base station 200 may be an integrated access and backhaul (IAB) donor or an IAB node.

A program for causing a computer to execute each process performed by the UE 100 or the base station 200 may be provided. The program may be recorded in a computer readable medium. The program may be installed in the computer by using the computer readable medium. Here, the computer readable medium where the program is recorded may be a non-transitory recording medium. The non-transitory recording medium is not particularly limited, but may be, for example, a recording medium such as a compact disk read only memory (CD-ROM) or a digital versatile disc read only memory (DVD-ROM). Furthermore, a circuit that executes each process to be performed by the UE 100 or the base station 200 may be integrated, and at least a part of the UE 100 or the base station 200 may be configured as a semiconductor integrated circuit (a chipset or a system on chip (SoC)).

In the above-described embodiment, "transmit" may mean performing a process of at least one layer in a protocol stack used for transmission, or may mean physically transmitting a signal wirelessly or by wire. Alternatively, "transmit" may mean a combination of performing of the process of at least one layer and physically transmitting of a signal wirelessly or by wire. Similarly, "receive" may mean performing a process of at least one layer in a protocol stack used for reception, or may mean physically receiving a signal wirelessly or by wire. Alternatively, "receive" may mean a combination of performing of the processing of at least one layer and physically receiving of a signal wirelessly or by wire. Similarly, "acquire (obtain/acquire)" may mean acquiring information from stored information, may mean acquiring information from information received from other nodes, or may mean acquiring information by generating the information. Similarly, the descriptions "on the basis of" and "depending on/in response to" do not mean "only on the basis of" or "depending only on" unless explicitly stated otherwise. The description "on the basis of" means both "only on the basis of" and "at least in part on the basis of." Similarly, the description "according to" means both "only according to" and "at least partially according to." Similarly, "include" and "comprise" do not mean to include only the listed items, but mean that the terms may include only the listed items or may include additional items in addition to the listed items. Similarly, in the present disclosure, "or" does not mean exclusive OR but means OR. Moreover, any reference to elements using designations such as "first", "second", and the like used in the present disclosure does not generally limit the amount or order of those elements. These designations may be used in the present disclosure as a convenient method to distinguish between two or more elements. Therefore, references to first and second elements do not mean that only two elements can be employed therein or that the first element should precede the second element in any form. In the present disclosure, when articles such as a, an, and the in English are added by translation, these articles include a plurality of articles unless the context clearly indicates otherwise.

Although the present disclosure has been described in accordance with examples, it is understood that the present disclosure is not limited to the examples or structures. Various modifications or modifications within an equivalent range are also included in the present disclosure. In addition, various combinations or modes, or other combinations or modes including only one element, more elements, or less elements are also included within the scope and idea of the present disclosure.

### (Supplementary Notes)

Features related to the above-described embodiment are additionally described.

### (Supplementary Note 1)

A communication apparatus, comprising:
a receiver configured to receive a system information block (SIB) from a base station; and
a controller configured to determine a number of bits of a bitmap for an availability indication of a tracking reference signal (TRS) in downlink control information (DCI), wherein
the controller is configured to
   determine, in a case where a TRS resource set configuration that is a list of TRS resource sets is included in the SIB, the number of bits on a basis of an identifier related to the TRS resource set, and
   determine, in a case where the TRS resource set configuration is not included in the SIB, the number of bits as 0.

### (Supplementary Note 2)

The communication apparatus according to supplementary note 1, wherein
the identifier is included in the TRS resource set configuration.

### (Supplementary Note 3)

The communication apparatus according to supplementary note 1 or 2, wherein
cyclic redundancy check (CRC) scrambled by a paging radio network temporary identifier (P-RNTI) are attached to the DCI.

### (Supplementary Note 4)

The communication apparatus according to any one of supplementary notes 1 to 3, wherein
cyclic redundancy check (CRC) scrambled by a paging early indication-radio network temporary identifier (PEI-RNTI) are attached to the DCI.

### (Supplementary Note 5)

The communication apparatus according to any one of supplementary notes 1 to 4, wherein
the receiver is configured to receive the DCI from the base station, and
the controller is configured to specify the availability indication of the received DCI on a basis of the number of bits determined.

### (Supplementary Note 6)

The communication apparatus according to any one of supplementary notes 1 to 5, wherein
the receiver is configured to receive the TRS based on the TRS resource set on a basis of a value of a bit of the bitmap of the number of bits determined.

### (Supplementary Note 7)

Abase station, comprising:
a transmitter configured to transmit a system information block (SIB); and
a controller configured to determine a number of bits of a bitmap for an availability indication of a tracking reference signal (TRS) in downlink control information (DCI), wherein
the controller is configured to
   determine, in a case where a TRS resource set configuration that is a list of TRS resource sets is not included in the SIB, the number of bits based on an identifier related to the TRS resource set, and
   determine, in a case where the TRS resource set configuration is not included in the SIB, the number of bits as 0.

### (Supplementary Note 8)

A communication method performed by a communication apparatus, the communication method comprising the steps of:
receiving a system information block (SIB) from a base station; and
determining a number of bits of a bitmap for an availability indication of a tracking reference signal (TRS) in downlink control information (DCI), wherein
the step of determining includes
   determining, in a case where a TRS resource set configuration that is a list of TRS resource sets is included in the SIB, the number of bits on a basis of an identifier related to the TRS resource set, and
   determining, in a case where the TRS resource set configuration is not included in the SIB, the number of bits as 0.

## Claims

1. A communication apparatus (100), comprising:
a receiver (112) configured to receive a system information block (SIB) from a base station (200); and
a controller (120) configured to determine a number of bits of a bitmap for an availability indication of a tracking reference signal (TRS) in downlink control information (DCI), wherein
the controller is configured to
determine, in a case where a TRS resource set configuration that is a list of TRS resource sets is included in the SIB, the number of bits on a basis of an identifier related to the TRS resource set, and
determine, in a case where the TRS resource set configuration is not included in the SIB, the number of bits as 0.

2. The communication apparatus according to claim 1, wherein
the identifier is included in the TRS resource set configuration.

3. The communication apparatus according to claim 1 or 2, wherein
cyclic redundancy check (CRC) scrambled by a paging radio network temporary identifier (P-RNTI) are attached to the DCI.

4. The communication apparatus according to claim 1 or 2, wherein
cyclic redundancy check (CRC) scrambled by a paging early indication-radio network temporary identifier (PEI-RNTI) are attached to the DCI.

5. The communication apparatus according to claim 1 or 2, wherein
the receiver is configured to receive the DCI from the base station, and
the controller is configured to specify the availability indication of the received DCI on a basis of the number of bits determined.

6. The communication apparatus according to claim 1 or 2, wherein
the receiver is configured to receive the TRS based on the TRS resource set on a basis of a value of a bit of the bitmap of the number of bits determined.

7. Abase station (200), comprising:
a transmitter (211) configured to transmit a system information block (SIB); and
a controller (230) configured to determine a number of bits of a bitmap for an availability indication of a tracking reference signal (TRS) in downlink control information (DCI), wherein
the controller is configured to
determine, in a case where a TRS resource set configuration that is a list of TRS resource sets is not included in the SIB, the number of bits based on an identifier related to the TRS resource set, and
determine, in a case where the TRS resource set configuration is not included in the SIB, the number of bits as 0.

8. A communication method performed by a communication apparatus (100), the communication method comprising the steps of:
receiving a system information block (SIB) from a base station (200); and
determining a number of bits of a bitmap for an availability indication of a tracking reference signal (TRS) in downlink control information (DCI), wherein
the step of determining includes
determining, in a case where a TRS resource set configuration that is a list of TRS resource sets is included in the SIB, the number of bits on a basis of an identifier related to the TRS resource set, and
determining, in a case where the TRS resource set configuration is not included in the SIB, the number of bits as 0.
